# EUROPÄISCHE PATENTSCHRIFT

(11) **EP 2 593 490 B1**
(45) Veröffentlichungstag und Bekanntmachung des Hinweises auf die Patenterteilung: **09.09.2015**
(21) Anmeldenummer: 11730679.5
(22) Anmeldetag: 11.07.2011
(51) Int. Cl.: C08G 18/10, C08G 18/32, C08G 18/79, C09D 175/04, C08G 18/62, C08G 18/80

(54) **HOCHFUNKTIONELLE URETHANGRUPPEN AUFWEISENDE POLYISOCYANATE**
HIGH-FUNCTIONALITY POLYISOCYANATES HAVING URETHANE GROUPS
POLYISOCYANATES PRÉSENTANT DES GROUPES URÉTHANE HAUTEMENT FONCTIONNELS

(30) Priorität: 13.07.2010 EP 10169337
(43) Veröffentlichungstag der Anmeldung: 22.05.2013
(73) Patentinhaber: BASF SE, 67056 Ludwigshafen (DE)
(72) Erfinder: ELIZALDE, Oihana, Charlotte NC 28279 (US); LUCAS, Frederic, 67063 Ludwigshafen (DE); STEINBRECHER, Angelika, Maria, 70193 Stuttgart (DE); TUCHBREITER, Lydie, Charlotte NC 28210 (US)
(86) Internationale Anmeldenummer: PCT/EP2011/061772
(87) Internationale Veröffentlichungsnummer: WO 2012/007431

(56) Entgegenhaltungen:
- EP-A2- 1 134 247
- EP-A2- 1 914 255
- WO-A1-2004/060955
- US-A1- 2007 142 610

## Beschreibung

Die vorliegende Erfindung betrifft neue urethangruppenhaltige Polyisocyanate auf Basis von aliphatischen und/oder cycloaliphatischen Diisocyanaten und deren Verwendung.

EP1091991 B1 beschreibt Zweikomponenten-Polyurethanmischungen mit einem hochfunktionellen, bevorzugt mindestens vierfunktionellen Polyisocyanat als A-Komponente und einem Polyol als B-Komponente. Die B-Komponente kann auch niedermolekulare Di- bis Pentaole enthalten.

Polyisocyanat und Polyol werden lediglich in einem NCO:OH-Verhältnis von 0,6 bis 1,4:1 eingesetzt, da es sich bei den Mischungen um Beschichtungsmassen für Beschichtungen handelt, in denen im wesentlichen alle reaktiven Gruppen nach er Härtung abreagiert sein sollen.

EP 1497351 B1 beschreibt die Herstellung von hochfunktionellen Polyisocyanaten durch Trimerisierung von einer Mischung enthaltend aliphatische Diisocyanate und Uretdione. Alkohole sind keine anwesend.

EP 1061091 A beschreibt mindestens difunktionelle Polyisocyanate mit Allophanatgruppen durch Reaktion von Polyisocyanaten mit einem Monoalkohol sowie optional höherfunktionellen Di- oder Polyolen.

Nachteilig daran ist, daß mittels einer Allophanatbindung nicht mehr als zwei Polyisocyanate miteinander verknüpft werden können und dadurch dir Funktionalität der entstehenden Produkte begrenzt ist.

EP 620237 A2 beschreibt Präpolymere aus Diisocyanaten und Polyolen. Umsetzung mit höherfunktionellen Polyisocyanaten ist nicht offenbart.

Nachteilig daran ist, daß die NCO-Funktionalität der entstehenden Produkte nicht höher ist als die OH-Funktionalität der eingesetzten Polyole.

DE-OS 2305695 beschreibt Präpolymere aus Diisocyanaten und niedrigmolekularen Polyolen mit 2 bis 4 Hydroxygruppen.

Umsetzung mit höherfunktionellen Polyisocyanaten ist nicht offenbart.

Aufgabe der vorliegenden Erfindung war es, neue Polyisocyanate mit einer hohen Funktionalität für Lacke, besonders für Klarlacke, bereitzustellen, die eine hohe Härte und/oder Kratzfestigkeit aufweisen und/oder in Zweikomponenten-Polyurethanlacken eine beschleunigte Trocknung und/oder eine verbesserte Schwefelsäurebeständigkeit zeigen.

Die Aufgabe wird gelöst durch hochfunktionelle Urethangruppen aufweisende Polyisocyanate, erhältlich durch
- Umsetzung mindestens eines multifunktionellen Alkohols (A) mit einer Funktionalität, die im statistischen Mittel mehr als 2 beträgt, wobei es sich bei dem multifunktionellen Alkohol (A) um ein Polyol oder einer Mischung von Polyolen handelt,
- mindestens einem Polyisocyanat (B) mit einer Funktionalität von mehr als 2, das mindestens eine Isocyanurat, Biuret, Uretdion und/oder Allophanatgruppe aufweist und aufgebaut ist aus aliphatischen und/oder cycloaliphatischen Isocyanaten,
unter Reaktionsbedingungen, unter denen zwischen (A) und (B) Urethangruppen gebildet werden, mit der Maßgabe, daß
- das molare Verhältnis von NCO-Gruppen zu OH-Gruppen zwischen (B) und (A) mindestens 3:1 beträgt.

Der multifunktionelle Alkohol (A) weist eine Funktionalität von im statistischen Mittel mehr als 2 auf, bevorzugt mindestens 2,5, besonders bevorzugt mindestens 2,7 und ganz besonders bevorzugt mindestens 3.

Bei dem multifunktionellen Alkohol (A) kann es sich um ein Polyol (A2) oder eine Mischung von Polyolen (A2) handeln. Es kann sich auch um eine Mischung mindestens eines Diols (A1) mit mindestens einem Polyol (A2) mit einer Funktionalität von mindestens 3 handeln, so daß die oben genannte Funktionalität erhalten wird.

Beispiele für Polyole (A2) sind Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit und Isomalt.

Bevorzugt sind Polyole mit einer Funktionalität zwischen 3 und 4, besonders bevorzugt solche mit einer Funktionalität von 3.

Bevorzugte Polyole sind Trimethylolpropan, Trimethylolethan, Pentaerythrit, Glycerin, Ditrimethylolpropan und Dipentaerythrit, besonders bevorzugt sind Trimethylolpropan, Pentaerythrit und Glycerin, ganz besonders bevorzugt sind Trimethylolpropan und Glycerin.

Beispiele für Diole (A1) sind aliphatische Diole, die zwei bis 20, bevorzugt 2 bis 12 Kohlenstoffatome aufweisen, besonders bevorzugt 1,2-Ethandiol, 2,2-Dimethyl-1,2-ethandiol, 1,2-Propandiol, 1,3-Propandiol, 2,2-Dimethyl-1,3-propandiol, 2-Methyl-1,3-propandiol, 2-Ethyl-1,3-propandiol, 2-Ethyl-2-methyl-1,3-propandiol, 2-Butyl-2-ethyl-1,3-Propandiol, 1,2-Butandiol, 1,3-Butandiol, 1,4-Butandiol, 3-Methylpentan-1,5-diol, 1,6-Hexandiol, 2-Ethyl-1,3-hexandiol, 2-Propyl-1,3-heptandiol, 1,8-Octandiol, 2,4-Diethyloctan-1,3-diol, 1,10-Dekandiol, oder cycloaliphatische Diole, die sechs bis 20 Kohlenstoffatome aufweisen, bevorzugt Bis-(4-hydroxycyclohexan)isopropyliden, Tetramethylcyclobutandiol, 1,2-, 1,3- oder 1,4-Cyclohexandiol, Cyclooctandiol, Norbomandiol, 2,2-Bis(4-hydroxycyclohexyl)propan, 1,1-, 1,2-, 1,3- und 1,4-Cyclohexandimethanol.

Unter diesen sind die aliphatischen Diole bevorzugt, es bevorzugt sind 1,2-Ethandiol, 1,2-Propandiol, 1,3-Propandiol, 2,2-Dimethyl-1,3-propandiol, 1,4-Butandiol, 1,6-Hexandiol, 2-Ethyl-1,3-hexandiol und 2-Propyl-1,3-heptandiol, besonders bevorzugt 2,2-Dimethyl-1,3-propandiol, 1,4-Butandiol, 1,6-Hexandiol, 2-Ethyl-1,3-hexandiol und 2-Propyl-1,3-heptandiol, ganz besonders bevorzugt 1,4-Butandiol und 1,6-Hexandiol.

Es stellt eine bevorzugte Ausführungsform der vorliegenden Erfindung dar, den multifunktionellen Alkohol (A), bevorzugt das Polyol (A2) in alkoxylierter und/oder mit Hydroxyalkylcarbonyl veresterter Form, bevorzugt in entwerder alkoxylierter oder mit Hydroxyalkylcarbonyl veresterter Form einzusetzen.

Unter einem alkoxylierten Polyol wird dabei ein an mindestens einer Hydroxygruppe formal mit einem oder mehreren gleichen oder verschiedenen Alkylenoxiden umgesetzter Polyol verstanden.

Geeignete Alkylenoxide für eine solche Alkoxylierung sind beispielsweise Ethylenoxid, Propylenoxid, n-Butylenoxid, iso-Butylenoxid, Vinyloxiran und/oder Styroloxid.

Die Alkylenoxidkette kann bevorzugt aus Ethylenoxid-, Propylenoxid- und/oder Butylenoxideinheiten zusammengesetzt sein. Eine solche Kette kann sich aus einer Spezies eines Alkylenoxides oder aus einem Gemisch von Alkylenoxiden zusammensetzen. Wird ein Gemisch verwendet, können die unterschiedlichen Alkylenoxideinheiten statistisch oder als Block oder Blöcke einzelner Spezies vorliegen. Bevorzugt ist als Alkylenoxid Ethylenoxid, Propylenoxid oder ein Gemisch daraus, besonders bevorzugt ist entweder Ethylenoxid öder Propylenoxid und ganz besonders bevorzugt Ethylenoxid.

Die Anzahl der Alkylenoxideinheiten in der Kette beträgt beispielsweise 1 bis , bevorzugt 1 bis 5, besonders bevorzugt 1 - 4 und insbesondere 1 - 3, bezogen auf die jeweiligen Hydroxygruppen des Polyols.

Besonders bevorzugt sind alkoxylierte Polyole der Formeln (IIa) bis (IIc), 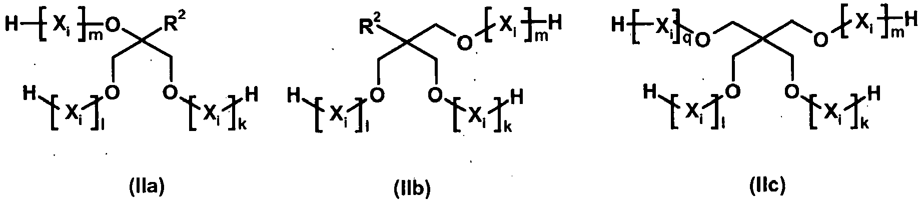 worin
R² Wasserstoff oder C₁ - C₁₈-Alkyl,
k, I, m, q unabhängig voneinander je für eine ganze Zahl von 1 bis 10, bevorzugt 1 bis 5, besonders bevorzugt 1 bis 4 und ganz besonders bevorzugt für 1 bis 3 steht und
jedes Xi für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, - C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Bevorzugt handelt es sich dabei um Acrylate von pro Hydroxygruppe ein- bis fünffach, besonders bevorzugt ein- bis vierfach und ganz besonders bevorzugt ein- bis dreifach ethoxyliertem, propoxyliertem oder gemischt ethoxyliertem und propoxyliertem und insbesondere ausschließlich ethoxyliertem oder speziell unalkoxyliertem Glycerin, Trimethylolpropan, Trimethylolethan oder Pentaerythrit.

Unter einer mit Hydroxyalkylcarbonyl veresterten Form wird verstanden, daß der Alkohol mit mindestens einer Gruppe 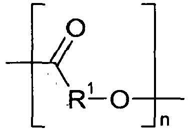 verestert ist,
worin R¹ einen zweibindigen, 3 bis 7 Kohlenstoffatome aufweisenden Alkylenrest und n eine positive ganze Zahl von 1 bis 5, bevorzugt 1 bis 4, besonders bevorzugt 1 bis 3 bedeuten.

Der 3 bis 7, bevorzugt 4 bis 6, besonders bevorzugt 5 bis 6 Kohlenstoffatome aufweisende Alkylenrest R¹ kann beispielsweise 1,3-Propylen, 1,4-Butylen, 1,5-Pentylen, 1,6-Hexylen oder 1,5-Hexylen sein, bevorzugt 1,4-Butylen oder 1,5-Pentylen und besonders bevorzugt 1,5-Pentylen.

Wird der multifunktionelle Alkohol (A) in Form eines Gemisches von Polyolen oder Diolen (A1) und Polyolen (A2) eingesetzt, so kann das Verhältnis dieser Komponenten beliebig gewählt werden, solange die oben geforderte Funktionalität des multifunktionellen Alkohols (A) eingehalten wird.

Bevorzugt beträgt das Verhältnis von Diolen (A1) zu Polyolen (A2) von 10:90 bis 90:10 (bezogen auf die molaren Mengen von Diol und Polyol), besonders bevorzugt von 20:80 bis 80:20, ganz besonders bevorzugt von 30:70 bis 70:30 und insbesondere von 40:60 bis 60:40.

Das Polyisocyanat (B) weist eine Funktionalität von mehr als 2 auf, bevorzugt mindestens 2,2, besonders bevorzugt mindestens 2,4, ganz besonders bevorzugt mindestens 2,8 und insbesondere mindestens 3.

Die Polyisocyanate (B) sind aufgebaut aus aliphatischen und/oder cycloaliphatischen, bevorzugt entweder aliphatischen oder cycloaliphatischen Diisocyanaten.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Bevorzugte Diisocyanate sind 1,6-Hexamethylendiisocyanat, Isophorondiisocyanat und/oder 4,4'- oder 2,4'-Di(isocyanatocyclohexyl)methan, besonders bevorzugt sind 1,6-Hexamethylendiisocyanat und/oder Isophorondiisocyanat und ganz besonders bevorzugt ist 1,6-Hexamethylendiisocyanat.

Es können auch Gemische der genannten Diisocyanate vorliegen.

Als Polyisocyanate kommen Isocyanuratgruppen aufweisende Polyisocyanate, Uretdiondiisocyanate, Biuretgruppen aufweisende Polyisocyanate, Urethan- und/oder Allophanatgruppen aufweisende Polyisocyanate von geradlinigen oder verzweigten C₄-C₂₀-Alkylendiisocyanaten oder cycloaliphatischen Diisocyanaten mit insgesamt 6 bis 20 C-Atomen oder deren Gemische in Betracht.

Die einsetzbaren Polyisocyanate haben bevorzugt einen Gehalt an Isocyanatgruppen (berechnet als NCO, Molekulargewicht = 42 g/mol) von 10 bis 60 Gew% bezogen auf das Di- und Polyisocyanat(gemisch), bevorzugt 12 bis 50 Gew% und besonders bevorzugt 12 bis 40 Gew%.

Besonders bevorzugt sind Hexamethylendiisocyanat, 1,3-Bis(isocyanatomethyl)cyclohexan, Isophorondiisocyanat und Di(isocyanatocyclohexyl)methan oder deren Polyisocyanate, ganz besonders bevorzugt sind Isophorondiisocyanat und Hexamethylendiisocyanat oder deren Polyisocyanate, insbesondere bevorzugt ist Hexamethylendiisocyanat oder dessen Polyisocyanate.

Weiterhin bevorzugt sind
1) Isocyanuratgruppen aufweisende Polyisocyanate von aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und/oder Isophorondiisocyanat. Bei den dabei vorliegenden Isocyanuraten handelt es sich insbesondere um Tris-isocyanatoalkyl- bzw. Trisisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.
2) Uretdiondiisocyanate mit aliphatisch und/oder cycloaliphatisch gebundenen Isocyanatgruppen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können als Polyisocyanate (B) im Gemisch mit anderen Polyisocyanaten, insbesondere den unter 1) genannten, eingesetzt werden.
3) Biuretgruppen aufweisende Polyisocyanate mit cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso*-Propanol, n-Propanol, n-Butanol, *iso*-Butanol, *sek*-Butanol, *tert*-Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.

Die Polyisocyanate können im Gemisch, gegebenenfalls auch im Gemisch mit Diisocyanaten, eingesetzt werden.

Zur Herstellung der hochfunktionellen urethangruppenhaltigen Polyisocyanate werden Polyisocyanat (B) und multifunktioneller Alkohol (A) mit oder ohne Lösungsmittel unter Urethanisierungsbedingungen miteinander umgesetzt.

"Urethanisierungsbedingungen" bedeutet dabei, daß die Reaktionsbedingungen so gewählt werden, daß durch Umsetzung der isocyanatgruppenhaltigen Komponente (B) und der hydroxygruppenhaltigen Komponente (A) zumindest teilweise Urethangruppen entstehen.

Die Temperatur beträgt bei dieser Umsetzung in der Regel bis zu 150 °C, bevorzugt bis zu 120 °C, besonders bevorzugt unter 100 °C und ganz besonders bevorzugt unter 90 °C und wird zumeist in Gegenwart mindestens eines Katalysators durchgeführt, der die Urethanisierungsreaktion katalysiert. Die Reaktion kann aber auch in Abwesenheit eines Katalysators durchgeführt werden.

In der Regel sollte die Temperatur der Reaktion mindestens 20 °C betragen, bevorzugt mindestens 30, besonders bevorzugt mindestens 40 und ganz besonders bevorzugt mindestens 50 °C.

Katalysatoren sind hierbei solche Verbindungen, die durch ihre Anwesenheit in einem Eduktgemisch zu einem höheren Anteil an urethangruppenhaltigen Reaktionsprodukten führen als das gleiche Eduktgemisch in deren Abwesenheit unter denselben Reaktionsbedingungen.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinndibutyrat, Dibutylzinn-bis(2-ethylhexanoat), Dibutylzinn-dilaurat, Dibutylzinn-maleat, Dioctylzinn-dilaurat und Dioctylzinn-diacetat. Zudem können Zink-(II)-Salze eingesetzt werden, wie beispielsweise Zink-(II)-dioctoat. Auch Metallkomplexe wie Acetylacetonate des Eisens, Titans, Aluminiums, Zirkons, Mangans, Nickels, Zinks und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-dioctoat, Zirkon-Acetylacetonat und Zirkon-2,2,6,6-tetramethyl-3,5-heptandionat.

Auch Wismut-und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F-, Cl⁻, ClO⁻, ClO₃⁻, ClO₄⁻, Br⁻, J⁻, JO₃⁻, CN-, OCN-, NO₂⁻, NO₃⁻, HCO₃⁻, CO₃²⁻, S²⁻, SH-, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Ferner sind als Katalysatoren einsetzbar:
- Organische Metallsalze der Formel (A)ₙ-R-O-CO-O^{e}M^{⊕} gemäß US-A-3 817 939, in der bedeuten:
   A eine Hydroxylgruppe oder ein Wasserstoffatom,
   n eine Zahl von 1 bis 3,
   R einen polyfunktionellen linearen oder verzweigten, aliphatischen oder aromatischen Kohlenwasserstoffrest und
   M^{®} in Kation, z.B. ein Alkalimetallkation oder ein quarternäres Ammoniumkation, wie Tetraalkylammonium, sowie
- quartäre Hydroxyalkylammoniumverbindungen der Formel

   R²⁴,R²⁵,R²⁶N^{⊕}-CH₂-CH(OH)-R^{27 ⊖}O-(CO)-R²⁸
als Katalysator gemäß DE-A-26 31 733 (US-A-4 040 992) mit den dort angegeben Definitionen für die Reste.

Besonders geeignet als Katalysatoren für das Verfahren sind quartäre Ammoniumsalze entsprechend der Formel 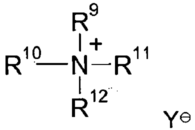 mit
Y^{⊖}= Carboxylat (R¹³COO⁻), Fluorid (F-), Carbonat (R¹³O(CO)O⁻) oder Hydroxid (OH⁻),
wie sie für Y⁻ = OH⁻ im US-Patent 4,324,879 und in den Deutschen Offenlegungsschriften 2,806,731 und 2,901,479 beschrieben sind.

Bevorzugt handelt es sich bei dem Rest Y^{⊖} um ein Carboxylat, Carbonat oder Hydroxid und besonders bevorzugt um ein Carboxylat oder Hydroxid.

R¹³ ist darin Wasserstoff, C₁ bis C₂₀-Alkyl, C₆ bis C₁₂-Aryl oder C₇ bis C₂₀-Arylalkyl, das jeweils optional substituiert sein kann.

Bevorzugt ist R¹³ Wasserstoff oder C₁ bis C₈-Alkyl.

Bevorzugte quartäre Ammoniumsalze sind diejenigen, bei denen die Reste R⁹ bis R¹² gleiche oder unterschiedliche Alkylgruppen mit 1 bis 20, vorzugsweise 1 bis 4, Kohlenstoffatomen darstellen, die gegebenenfalls durch Hydroxyl- oder Phenylgruppen substituiert sind.

Zwei der Reste R⁹ bis R¹² können auch zusammen mit dem Stickstoffatom und gegebenenfalls einem weiteren Stickstoff- oder Sauerstoffatom einen heterocyclischen, fünf-, sechs- oder siebengliedrigen Ring bilden. Die Reste R⁹ bis R¹¹ können in jedem Falle auch Ethylenreste darstellen, die zusammen mit dem quartären Stickstoffatom und einem weiteren tertiären Stickstoffatom eine bicyclische Triethylendiaminstruktur bilden, vorausgesetzt, daß der Rest R¹² dann eine Hydroxyalkylgruppe mit 2 bis 4 Kohlenstoffatomen darstellt, bei der die Hydroxylgruppe vorzugsweise in der 2-Stellung zu dem quartären Stickstoffatom angeordnet ist. Der hydroxysubstituierte Rest oder die hydroxysubstituierten Reste können auch andere Substituenten enthalten, beispielsweise C₁- bis C₄-Alkyloxy-Substituenten.

Dabei können die Ammoniumionen auch Teil eines ein- oder mehrgliedrigen Ringsystems sein, beispielsweise abgeleitet von Piperazin, Morpholin, Piperidin, Pyrrolidin, Chinuclidin oder Di-aza-bicyclo-[2.2.2]-octan.

Beispiele für 1 bis 20 Kohlenstoffatome aufweisende Gruppen R⁹ bis R¹² sind unabhängig voneinander Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Nonyl, iso-Nonyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2-Hydroxyethyl, 2-Hydroxypropyl, 3-Hydroxypropyl, 4-Hydroxybutyl, 6-Hydroxyhexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Methylnaphthyl, Isopropyl-naphthyl, Chlornaphthyl, 2,6-Dimethylphenyl, 2,4,6-Trimethylphenyl, 2,6-Dimethoxyphenyl, 2,6-Dichlorphenyl, Cyclopentyl, Cyclohexyl, Cyclooctyl, Cyclododecyl, Methylcyclopentyl, Dimethyl-cyclopentyl, Methylcyclohexyl, Dimethylcyclohexyl, Diethylcyclohexyl, Butylcyclohexyl, Chlorcyclohexyl, Dichlorcyclohexyl, Dichlorcyclopentyl, Norbornyl oder Norbornenyl.

Bevorzugte sind unabhängig voneinander die Reste R⁹ bis R¹² C₁ bis C₄-Alkyl. R¹² kann zusätzlich Benzyl sein oder ein Rest der Fomel 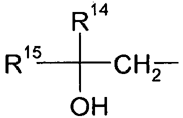 worin R¹⁴ und R¹⁵ unabhängig voneinander Wasserstoff oder C₁ bis C₄-Alkyl sein kann.

Besonders bevorzugte Reste R⁹ bis R¹² sind unabhängig voneinander Methyl, Ethyl und n-Butyl und für R¹² zusätzlich Benzyl, 2-Hydroxyethyl und 2-Hydroxypropyl.

Bevorzugt können für das erfindungsgemäße Verfahren folgende Katalysatoren eingesetzt werden:
Quarternäre Ammoniumhydroxide, vorzugsweise N,N,N-Trimethyl-N-benzylammoniumhydroxid und N,N,N-Trimethyl-N-(2-hydroxypropyl)-ammoniumhydroxid, gemäß DE-A-38 06 276.

Hydroxyalkyl substituierte quarternäre Ammoniumhydroxide gemäß EP-A-10 589 (US-A-4 324 879).

Organische Metallsalze der Formel (A)ₙ-R-O-CO-O^{⊖}M^{⊕} gemäß US-A-3 817 939, in der bedeuten, A eine Hydroxylgruppe oder ein Wasserstoffatom, n eine Zahl von 1 bis 3, R einen polyfunktionellen linearen oder verzweigten, aliphatischen öder aromatischen Kohlenwasserstoffrest und M ein Kation einer starken Base, z.B. ein Alkalimetallkation oder ein quarternäres Ammoniumkation, wie Tetraalkylammonium.

Bevorzugte Katalysatoren sind Zink-(II)-Salze, unter diesen besonders Zink Acetylacetonat.

Weiterhin bevorzugt ist Dibutylzinndilaurat.

Der Katalysator wird je nach Aktivität normalerweise in Mengen von 0,001 bis 10 mol% bzgl. eingesetzter Isocyanatgruppen eingesetzt, bevorzugt 0,5 bis 8, besonders bevorzugt 1 bis 7 und ganz besonders bevorzugt 2 bis 5 mol%.

Das Polyisocyanat (B) wird in mindestens dreifachem Überschuß der NCO-Gruppen bezogen auf die Hydroxygruppen im multifunktionellen Alkohol (A) eingesetzt, bevorzugt in einem mindestens 4-fachem Überschuß, besonders bevorzugt im mindestens 5- und ganz besonders bevorzugt im mindestens 6-fachen Überschuß.

Der unumgesetzte Teil Polyisocyanat (B) kann entweder abgetrennt werden oder bevorzugt im Reaktionsgemisch verbleiben.

Die Reaktion wird bevorzugt ohne Lösungsmittel durchgeführt, kann aber auch in Gegenwart mindestens eines Lösungsmittel durchgeführt werden. Ebenso kann das erhaltene Reaktionsgemisch nach Beendigung der Reaktion in einem Lösungsmittel formuliert werden.

Als Lösungsmittel einsetzbar sind solche, die keine gegenüber Isocyanatgruppen reaktiven Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, chlorierte Kohlenwasserstoffe, Ketone, Ester, alkoxylierte Alkansäurealkylester, Ether, respektive Gemische der Lösungsmittel.

Als aromatisch Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155-180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen. Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, Ethylacetat, 1-Methoxypropylacetat-2 und 2-Methoxyethylacetat.

Ether sind beispielsweise Tetrahydrofuran (THF), Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert-Butylmethylketon.

Es stellt eine bevorzugte Ausführungsform der vorliegenden Erfindung dar, die erfindungsgemäßen hochfunktionellen Polyisocyanate mit einem Lösungsmittel zu formulieren. Ein bevorzugtes Lösungsmittel ist n-Butylacetat.

Die Konzentration des erfindungsgemäßen Polyisocyanats in der Lösung sollte mindestens 50 Gew%, bevorzugt mindestens 60 Gew% und besonders bevorzugt mindestens 70 Gew% betragen.

Die erfindungsgemäßen urethangruppenhaltigen hochfunktionellen Polyisocyanat weisen in der Regel eine NCO-Funktionalität von mehr als 2, bevorzugt mindestens 3, besonders bevorzugt mindestens 4, ganz besonders bevorzugt mindestens 5 und insbesondere mehr als 6.

Die erfindungsgemäßen urethangruppenhaltigen hochfunktionellen Polyisocyanat weisen in der Regel ein zahlenmittleres Molekulargewicht Mn von 1000 bis 20000, bevorzugt von 1200 bis 10000 und besonders bevorzugt von 1500 bis 5000 g/mol und ein gewichtsmittleres Molekulargewicht Mw von 1000 bis 50000 und bevorzugt von 1500 bis 30000 auf. Die Molekulargewichte können bestimmt werden durch Gelpermeationschromatographie mit einem geeigneten Polymerstandard und Tetrahydrofuran oder Dimethylformamid als Elutionsmittel.

Die erfindungsgemäßen hochfunktionellen urethangruppenhaltigen Polyisocyanate finden beispielsweise Anwendung in zweikomponentigen Polyurethanlacken mit mindestens einer Komponente, die mindestens zwei gegenüber Isocyanat reaktive Gruppen enthalten (Bindemittel). Dazu können die erfindungsgemäßen hochfunktionellen urethangruppenhaltigen Polyisocyanate allein oder im Gemisch mit anderen Polyisocyanaten (C) als Vernetzerkomponente eingesetzt werden.

Derartige andere Polyisocyanate (C) sind durch Oligomerisierung von monomeren Isocyanaten erhältlich.

Die dafür eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyänatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Es können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was beispielsweise in Anwendungen in der Elektronikindustrie vorteilhaft ist.

In einer Ausführungsform weisen die eingesetzten Isocyanate einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (C), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten (C) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl-bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den andereren Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen . Diese Urethan- und/oder Allophanatgruppen aufweisenden Polyisocyanate haben im allgemeinen einen NCO-Gehalt von 12 bis 24 Gew.-% und eine mittlere NCO-Funktionalität von 2,5 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen, jeweils in Anwesenheit von ein-, zwei- oder mehrwertigen, bevorzugt einwertigen Alkoholen, hergestellt werden.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, gegebenenfalls in Gegenwart von geeigneten Katalysatoren. Diese Biuret- oder Urethan-/Allophanatgruppen aufweisenden Polyisocyanate weisen im allgemeinen einen NCO-Gehalt von 18 bis 22 Gew.-% und eine mittlere NCO-Funktionalität von 2,8 bis 6 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-12 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Moleküle handelt es sich beispielsweise um Hydroxyallkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43,131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat (C) ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, insbesondere handelt es sich um ein isocyanuratgruppenhaltiges Polyisocyanat.

In einer besonders bevorzugten Ausführungsform handelt es sich bei dem Polyisocyanat (C) um Isocyanuratgruppen enthaltende Polyisocyanate von 1,6-Hexamethylendiisocyanat.

In einer weiteren besonders bevorzugten Ausführungsform handelt es sich bei dem Polyisocyanat um ein Gemisch von Isocyanuratgruppen enthaltenden Polyisocyanaten von 1,6-Hexamethylendiisocyanat und von Isophorondiisocyanat.

In einer besonders bevorzugten Ausführungsform handelt es sich bei dem Polyisocyanat (C) um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Die erfindungsgemäßen hochfunktionellen urethangruppenhaltigen Polyisocyanate können gegebenenfalls im Gemisch mit anderen Polyisocyanaten (C) als Vernetzerkomponenten mit mindestens einem Bindemittel in Polyurethanlacken eingesetzt werden. In der Regel werden für Polyisocyanatzusammensetzungen, also die Summe der isocyanatgruppenhaltigen Verbindungen,
50 bis 100 Gew% der erfindungsgemäßen hochfunktionellen urethangruppenhaltigen Polyisocyanate eingesetzt, bevorzugt 50 bis 90 Gew% und besonders bevorzugt 60 bis 80 Gew%, und 0 bis 50 Gew% andere Polyisocyanate (C), bevorzugt 10 bis 50, besonders bevorzugt 20 bis 40 Gew%,
mit der Maßgabe, daß die Summe immer 100 Gew% beträgt.

Bei den Bindemitteln kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Copolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyetherpolyole.

Bevorzugte OH-Zahlen, gemessen gemäß DIN 53240-2, sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die Bindemittel eine Säurezahl gemäß DIN EN ISO 3682 bis 200 mg KOH/g, bevorzugt bis 150 und besonders bevorzugt bis 100 mg KOH/g aufweisen.

Polyacrylatpolyole weisen bevorzugt ein Molekulargewicht Mₙ von mindestens 1000, besonders bevorzugt mindestens 2000 und ganz besonders bevorzugt mindestens 5000 g/mol auf. Das Molekulargewicht Mₙ kann prinzipiell nach oben unbegrenzt sein, bevorzugt bis 200.000, besonders bevorzugt bis zu 100.000, ganz besonders bevorzugt bis zu 80.000 und insbesondere bis zu 50.000 g/mol betragen.

Letztere können beispielsweise Monoester von α,β-ungesättigten Carbonsäuren, wie Acrylsäure, Methacrylsäure (in dieser Schrift kurz als "(Meth)acrylsäure" bezeichnet), mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Die hydroxygruppentragenden Monomere werden in die Copolymerisation im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew% aus C₁-C₁₀-Alkyl(meth)acrylaten, Styrol und dessen Derivate, Vinylimidazol oder deren Mischungen bestehen.

Darüber können die Polymere hydroxyfunktionelle Monomere entsprechend dem obigen Hydroxygruppengehalt und gegebenenfalls weitere Monomere enthalten, z.B. (Meth)acrylsäureglycidylepoxyester, ethylenisch ungesättigte Säuren, insbesondere Carbonsäuren, Säureanhydride oder Säureamide.

Weitere Polymere sind z.B. Polyesterole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können. Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole in Betracht, wie sie z.B. durch Umsetzung von Phosgen mit einem Überschuß von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Weiterhin sind als Polymere auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Weiterhin können hydroxyfunktionelle Carbonsäuren eingesetzt werden, wie beispielsweise Dimethylolpropionsäure oder Dimethylolbutansäure.

Bei den Polymeren kann es sich natürlich auch um Verbindungen mit primären der sekundären Aminogruppen handeln.

Zur Herstellung der Polyurethanlacke werden Polyisocyanatzusammensetzung und Bindemittel in einem Molverhältnis von Isocyanatgruppen zu gegenüber Isocyanat reaktiven Gruppen von 0,1:1 bis 10:1, bevorzugt 0,2:1 bis 5:1, besonders bevorzugt 0,3:1 bis 3:1, ganz besonders bevorzugt 0,5:1 bis 2:1, insbesondere 0,8:1 bis 1,2:1 und speziell 0,9:1 bis 1,1:1 miteinander vermischt, wobei gegebenenfalls noch weitere lacktypische Bestandteile eingemischt werden können, und auf das Substrat aufgetragen.

Anschließend wird das Lackgemisch unter geeigneten Bedingungen ausgehärtet. Je nach Anwendung kann dies beispielsweise bei 100 bis 140 °C erfolgen, beispielsweise bei Lacken in OEM-Anwendungen, oder in einem niedrigeren Temperaturintervall von beispielsweise 20 bis 80 °C.

Dies erfordert je nach Temperatur in der Regel nicht mehr 12 Stunden, bevorzugt bis zu 8 Stunden, besonders bevorzugt bis zu 6, ganz besonders bevorzugt bis zu 4 und insbesondere bis zu 3 Stunden.

Ferner können Beschichtungsmassen 0 bis 10 Gew% mindestens eines UV Stabilisators enthalten.

Geeignete Stabilisatoren umfassen typische UV-Absorber wie Oxanilide, Triazine und Benzotriazol (letztere erhältlich als Tinuvin® -Marken der Ciba-Spezialitätenchemie) und Benzophenone.

Diese können zusätzlich 0 bis 5 Gew% geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat enthalten.

Ferner können Beschichtungsmassen weiterhin 0 bis 10 Gew% weiterer lacktypischer Additive enthalten.

Als weitere lacktypische Additive können beispielsweise Antioxidantien, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmödifikatoren, Plastifizierer oder Chelatbildner verwendet werden.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Beschichtungsmasse, gegebenenfalls unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einem Lack, der die erfindungsgemäßen urethangruppenhaltigen Polyisocyanate enthält, Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich prinzipiell zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können. Besonders bevorzugt sind sie jedoch zum Beschichten von Kunststoffoberflächen und metallischen Substraten geeignet.

Bevorzugt werden diese Beschichtungsmassen als Klar-, Basis- und Decklacke(n), Primern und Füller eingesetzt, besonders eignen sie sich durch ihre hohe Kratzfestigkeit als Decklack, bevorzugt als Klarlack, insbesondere in Beschichtungen auf (Groß-)Fahrzeugen und Flugzeugen und in Automobillacken als OEM und refinish-Anwendung.

Es ist ein Vorteil der erfindungsgemäßen urethangruppenhaltigen Polyisocyanate, daß sie in Klarlacken eine hohe Kratzfestigkeit gleichzeitig guter Elastizität ergeben. Zudem ergeben die erfindungsgemäßen Produkte meist eine geringere Viskosität.

### Beispiele:

### Polyisocyanat A:

Basonat® HI 100 der BASF SE, HDI-Isocyanurat mit einem NCO-Gehalt von 22,2% und einer Viskosität von 3500 mPa*s bei 23°C, Funktionalität von etwa 3,4.

### Polyisocyanat B:

Basonat® LR 9046 der BASF SE HDI-Isocyanurat mit einem NCO-Gehalt von 23,7% und einer Viskosität von 1350 mPa*s bei 23°C, Funktionalität von etwa 3,2.

### Trifunktioneller Alkohol A:

Auf Trimethylolpropan gestartetes und unter Kaliumhydroxidkatalyse hergestelltes, trifunktionelles Polyethylenoxid mit einer OH-Zahl von 600 mg KOH/g (nach DIN 53240) und einem Molekulargewicht von 277 g/mol.

### Trifunktioneller Alkohol B :

Auf Trimethylolpropan gestartetes und unter Kaliumhydroxidkatalyse hergestelltes, trifunktionelles Polypropylenoxid mit einer OH-Zahl von 546 (nach DIN 53240) und einem Molekulargewicht von 308 g/mol.

### Trifunktioneller Alkohol C :

Auf Trimethylolpropan durch Umsetzung mit 3 Äquivalenten Caprolacton in Gegenwart von Butyl zinn tris(2-ethylhexanoat) hergestelltes Polycaprolacton mit einer OH-Zahl von 319 (nach DIN 53240) und einem Molekulargewicht von 527,8 g/mol.

### Hazen-Farbzahl:

Verfahren zur Bestimmung der Gelbtönung technischer Flüssigkeiten nach DIN ISO 6271. Als Standard wird eine saure Lösung von Kaliumhexachloroplatinat eingesetzt.

### Vergleichsbeispiel 1:

Basonat® HI 100 der BASF SE: HDI-Isocyanurat mit einem NCO-Gehalt von 22,2% und einer Viskosität von 2800 mPa*s bei 23°C.

### Vergleichsbeispiel 2:

Desmodur® N3790 der Bayer AG: HDI-Isocyanurat (90%ig in Butylacetat) mit einem NCO-Gehalt von 17,8% und einer Viskosität von 2150 mPa*s bei 23°C.

### Beispiel 1 :

Es wurden 300,00g (0,5236 mol) Polyisocyanat A, 11,70g (0,084 mol) Trimethylolpropan in 133,6g Butylacetat gemischt. Die Lösung ist bei Raumtemperatur trüb und hat einen NCO-Gehalt von 14,9%. Die Lösung wird transparent nach Erhörung die Temperatur von Raumtemperatur auf 60°C. Die Mischung wurde unter Zusatz von Dibutylzinndilaurat als Katalysator umgesetzt. Nach 2 Stunden bei 60°C betrug der NCO-Gehalt 12,3%. Das Ansatz wurde dann abgekühlt und über Seitz-Filter T5500 abfiltriert. Das Produkt hat eine Viskosität von 550 mPas bei 23°C und eine Farbzahl von 14 Hazen.

### Beispiel 2 :

Es wurden 294,60g (0,53 mol) Polyisocyanat A, 25,00g (0,084 mol) trifunktioneller Alkohol A in 137,0g Butylacetat gemischt. Die Lösung ist bei Raumtemperatur transparent und hat einen NCO-Gehalt von 14,4%. Die Mischung wurde unter Zusatz von Dibutylzinndilaurat als Katalysator umgesetzt. Nach 1 Stunde bei 80°C betrug der NCO-Gehalt 11,5%. Das Ansatz wurde dann abgekühlt und über Seitz-Filter T5500 abfiltriert. Das entsprechende Produkt hatte eine Viskosität von 470 mPas bei 23°C und eine Farbzahl von 60 Hazen.

### Beispiel 3 :

Es wurden 300,00g (0,524 mol) Polyisocyanat A, 26,86g (0,084 mol) trifunktioneller Alkohol B in 140,08g Butylacetat gemischt. Die Lösung war bei Raumtemperatur transparent und hatte einen NCO-Gehalt von 14,1%. Die Mischung wurde unter Zusatz von Dibutylzinndilaurat als Katalysator umgesetzt. Nach 2 Stunden bei 60°C betrug der NCO-Gehalt 10,4%. Das Ansatz wurde dann abgekühlt und über Seitz-Filter T5500 abfiltriert. Das entsprechende Produkt hatte eine Viskosität von 500 mPas bei 23°C und eine Farbzahl von 18 Hazen.

### Beispiel 4 :

Es wurden 230,4g (0,42 mol) Polyisocyanat A, 25,0g (0,047 mol) trifunktioneller Alkohol C in 75,0g Butylacetat gemischt. Die Lösung war bei Raumtemperatur transparent. Die Mischung wurde unter Zusatz von Dibutylzinndilaurat als Katalysator umgesetzt. Nach 1,5 Stunden bei 60°C betrug der NCO-Gehalt 11,2%. Das Ansatz wurde dann abgekühlt und über Seitz-Filter T5500 abfiltriert. Das entsprechende Produkt hatte eine Viskosität von 760 mPas bei 23°C und eine Farbzahl von 10 Hazen.

### Beispiel 5:

Es wurden 350,0g (0,65 mol) Polyisocyanat B und 5,0g (0,050 mol) Glyzerin in 152,1g Butylacetat gemischt. Die Lösung war bei Raumtemperatur transparent. Die Mischung wurde unter Zusatz von Dibutylzinndilaurat als Katalysator umgesetzt. Nach 2 Stunden bei 80°C betrug der NCO-Gehalt 14,4%. Das Ansatz wurde dann abgekühlt und über Seitz-Filter T5500 abfiltriert. Das erhaltene Produkt hatte eine Viskosität von 70 mPas bei 23°C und eine Farbzahl von 20 Hazen.

### Anwendungstechnische Prüfung:

Die erfindungsgemäßen sowie Vergleichspolyisocyanate, wurden mit acrylsäurefreien, hydroxyfunktionellen Polyacrylatpolyolen (Joncryl® 922, Fa. BASF; Festgehalt = 80% in Butylacetat; OH-Zahl = 143 mg KOH/g entsprechend einen stöchiometrischen NCO/OH-Verhältnis von 1:1 gemischt und mit Butylacetat auf eine Applikationsviskosität von 20 s (DIN 53 211, Becher 4 mm Auslaufsdüse) eingestellt. Mit einem Ziehrahmen wurden Beschichtungen mit einer Nassfilmdicke von 200 µm auf Metallbleche aufgetragen. Die so enthaltenen Klarlacke wurden nach 10 Minuten Ablüftungszeit bei Raumtemperatur bzw. für die Bestimmung der Kratzfestigkeit und Säurebeständigkeit bei 60°C über einen Zeitraum von 30 Minuten gehärtet. Vor den Prüfungen wurden die Lackfilme über 24 h bei 23 ± 2 °C und 50 ± 10 % Luftfeuchte gelagert.

### Testverfahren:

Als Gelierzeit wird die Zeitspanne zwischen Lackformulierung und vollständiger Gelierung des Lackes betrachtet.

Zur Ermittlung der Trockengeschwindigkeit der Lackoberfläche wurde der Lack nach Applikation im regelmäßigen Abständen mit einem Wattebausch berührt. Der Test wird beendet, sobald keine Wattefasern mehr an der Lackoberfläche haften bleiben.

Die Pendelhärte wurde nach König bestimmt (EN ISO 1522).

Die Bestimmung des Gitterschnitts erfolgte nach EN ISO 2409. Dabei liegen die Noten zwischen 0 (sehr gute Haftfestigkeit) und 5 (sehr schlechte Haftfestigkeit).

Zur Bestimmung der Kratzfestigkeit des Lackes wird die Oberfläche mit einem korundpartikelhaltigen Scheuervlies unter einem Gewicht von 500g zerkratzt. Die Beschädigung wird über den Glanzwert des Lackes ermittelt. Der Reflow wird durch Tempern bei der in der Tabelle angegebenen Temperatur über den in der Tabelle angegebenen Zeitraum nach Zerkratzung über 50 Doppelhübe ermittelt.

Die Prüfung der Schwefelsäurebeständigkeit (Etchtest) erfolgte nach EN ISO 2812-1 (Verfahren3) im Temperaturbereich von 35-75°C:
Mit einer Pipette wurde ein 25 µm-Tropfen 1%ige Schwefelsäure auf ein bei einer vorgegebenen Temperatur (30 Minuten bei 80 oder 130 °C) ausgehärteten Lacks auf einem Gradientenofenblechs gegeben und dieses im Gradientenofen 30 Minuten bei 35-75 °C geheizt. Das Blech wurde danach mit Wasser abgewaschen und getrocknet. Angegeben ist die niedrigste Temperatur bei der nach Augenschein eine Anätzung auf dem Lack festzustellen war.

Mit 80 °C bzw. 130 °C ist in der Tabelle die Temperatur der Härtung des Lackes bezeichnet.
n.b. steht für nicht bestimmte Meßwerte.

| | Vergleichsbeispiel 1 | Vergleichsbeispiel 2 | Beispiel 1 | Beispiel 2 | Beispiel 3 | Beispiel 4 | Beispiel 5 |
|---|---|---|---|---|---|---|---|
| Wattetest ( min ) | 260 | 210 | 100 | 75 | 48 | 70 | 210 |
| Etchtest 80 °C, 0 h [°C] | < 30 | < 30 | 42 | 39 | 40 | 38 | 43 |
| nach 24 h [°C] | < 30 | < 30 | 42 | 38 | 40 | 38 | 43 |
| Kratzfestigkeit 80 °C; 20° [%] | 94 | 93 | 97 | 97 | 96 | 95 | 95 |
| Kratzfestigkeit 80 °C; 60° [%] | 100 | 100 | 101 | 101 | 101 | 102 | 102 |
| 10 dop. Hübe; 20 ° [%] | 2 | 8 | 13 | 33 | 34 | 16 | n.b. |
| 10 dop. Hübe; 60 ° [%] | 7 | 21 | 32 | 51 | 58 | 36 | n.b. |
| 50 dop. Hübe; 20 ° [%] | 1 | 1 | 2 | 2 | 2 | 2 | n.b. |
| 50 dop. Hübe; 60 ° [%] | 5 | 6 | 9 | 8 | 8 | 10 | n.b. |
| Kratzfestigkeit 130 °C; 20° [%] | 96 | 89 | 97 | 96 | 96 | 95 | n.b. |
| Kratzfestigkeit 130 °C; 60° [%] | 102 | 101 | 102 | 101 | 101 | 103 | 101 |
| 10 dop. Hübe; 20 ° [%] | 8 | 19 | 20 | 22 | 23 | 13 | n.b. |
| 10 dop. Hübe; 60 ° [%] | 25 | 51 | 50 | 52 | 56 | 46 | n.b. |
| 50 dop. Hübe; 20 ° [%] | 2 | 5 | 4 | 5 | 5 | 5 | n.b. |
| 50 dop. Hübe; 60 ° [%] | 6 | 15 | 17 | 18 | 18 | 18 | n.b. |
| Pendeldämpfung 80 °C | 38 | 49 | 80 | 70 | 80 | 72 | 59 |
| Pendeldämpfung 130 °C | 62 | 73 | 118 | 111 | 115 | 107 | 103 |

## Patentansprüche

1. Hochfunktionelle Urethangruppen aufweisende Polyisocyanate, erhältlich durch
- Umsetzung mindestens eines multifunktionellen Alkohols (A) mit einer Funktionalität, die im statistischen Mittel mehr als 2 beträgt, wobei es sich bei dem multifunktionellen Alkohol (A) um ein Polyol oder einer Mischung von Polyolen handelt,
- mindestens einem Polyisocyanat (B) mit einer Funktionalität von mehr als 2, das mindestens eine Isocyanurat, Biuret, Uretdion und/oder Allophanatgruppe aufweist und aufgebaut ist aus aliphatischen und/oder cycloaliphatischen Isocyanaten,
unter Reaktionsbedingungen, unter denen zwischen (A) und (B) Urethangruppen gebildet werden, mit der Maßgabe, daß
- das molare Verhältnis von NCO-Gruppen zu OH-Gruppen zwischen (B) und (A) mindestens 3:1 beträgt.

2. Hochfunktionelle Urethangruppen aufweisende Polyisocyanate gemäß Anspruch 1, **dadurch gekennzeichnet, daß** es sich bei dem Polyisocyanat (B) um Isocyanuratgruppen aufweisende Polyisocyanate auf Basis 1,6-Hexamethylendiisocyanat handelt.

3. Hochfunktionelle Urethangruppen aufweisende Polyisocyanate gemäß Anspruch 1, **dadurch gekennzeichnet, daß** der multifunktionelle Alkohol (A) mindestens ein Polyol, ausgewählt aus der Gruppe bestehend aus Trimethylolpropan, Trimethylolethan, Glycerin, Pentaerythrit, Dipentaerythrit und Ditrimethylolpropan, umfaßt.

4. Hochfunktionelle Urethangruppen aufweisende Polyisocyanate gemäß Anspruch 3, **dadurch gekennzeichnet, daß** das Polyol alkoxyliert ist.

5. Hochfunktionelle Urethangruppen aufweisende Polyisocyanate gemäß Anspruch 3, **dadurch gekennzeichnet, daß** das Polyol mit mindestens einer Gruppe 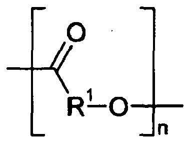 verestert ist,
worin R¹ einen zweibindigen, 3 bis 7 Kohlenstoffatome aufweisenden Alkylenrest und n eine positive ganze Zahl von 1 bis 5 bedeuten.

6. Hochfunktionelle Urethangruppen aufweisende Polyisocyanate gemäß Anspruch 1, **dadurch gekennzeichnet, daß** es sich bei dem multifunktionellen Alkohol (A) um ein Gemisch handelt, das mindestens ein Diol, ausgewählt aus der Gruppe bestehend aus 1,2-Ethandiol, 1,2-Propandiol, 1,3-Propandiol, 2,2-Dimethyl-1,3-propandiol, 2-Methyl-1,3-propandiol, 2-Ethyl-1,3-propandiol, 2-Ethyl-2-methyl-1,3-propandiol, 1,2-Butandiol, 1,3-Butandiol, 1,4-Butandiol, 1,6-Hexandiol, 2-Ethyl-1,3-hexandiol, 2-Propyl-1,3-heptandiol und 1,8-Octandiol, umfaßt.

7. Verwendung von hochfunktionellen Urethangruppen aufweisende Polyisocyanate gemäß einem der vorstehenden Ansprüche in Zweikomponenten-Beschichtungsmassen.

8. Zweikomponenten-Beschichtungsmassen, enthaltend
- mindestens ein hochfunktionelles Urethangruppen aufweisendes Polyisocyanat gemäß einem der Ansprüche 1 bis 6,
- mindestens eine Verbindung mit mindestens 2 gegenüber Isocyanatgruppen reaktiven Gruppen,
- optional Lösungsmittel, Pigment, Additive und/oder Verdicker.

9. Verfahren zur Herstellung von Polyurethanlacken, **dadurch gekennzeichnet, dass** man ein hochfunktionelles Urethangruppen aufweisendes Polyisocyanat gemäß einem der Ansprüche 1 bis 6 mit mindestens einem Bindemittel umsetzt, welches mit Isocyanat reaktive Gruppen enthält.

10. Verfahren zur Herstellung von Polyurethanlacken gemäß Anspruch 9, **dadurch gekennzeichnet, dass** das Bindemittel ausgewählt ist aus der Gruppe bestehend aus Polyacrylatpolyolen, Polyesterpolyolen, Polyetherpolyolen, Polyurethanpolyolen, Polyharnstoffpolyolen, Polyetherolen, Polycarbonaten, Polyesterpolyacrylatpolyolen, Polyesterpolyurethanpolyolen, Polyurethanpolyacrylatpolyolen, Polyurethanmodifizierten Alkydharzen, Fettsäuremodifizierten Polyesterpolyurethanpolyolen, Kopolymerisaten mit Allylethern und Co- bzw. Propfpolymerisaten aus den genannten Stoffgruppen.

11. Verwendung von hochfunktionellen Urethangruppen aufweisenden Polyisocyanaten gemäß einem der Ansprüche 1 bis 6 als Härter in Polyurethanlacken.

12. Verwendung gemäß Anspruch 11, **dadurch gekennzeichnet, daß** der Polyurethanlack in refinish-, Holz- oder Großfahrzeug-Lackierungen eingesetzt wird.

13. Verwendung von hochfunktionellen Urethangruppen aufweisenden Polyisocyanaten gemäß einem der Ansprüche 1 bis 6 als Härter in Lacken, Klebstoffen und Dichtungsmassen.

## Claims

1. A high-functionality polyisocyanate containing urethane groups and obtainable by
- reacting at least one polyfunctional alcohol (A), having a functionality which is on average more than 2, the polyfunctional alcohol (A) being a polyol or a mixture of polyols,
- at least one polyisocyanate (B), having a functionality of more than 2, which contains at least one isocyanurate, biuret, uretdione and/or allophanate group and is constructed from aliphatic and/or cycloaliphatic isocyanates,
under reaction conditions under which urethane groups are formed between (A) and (B), with the proviso that
- the molar ratio of NCO groups to OH groups between (B) and (A) is at least 3:1.

2. The high-functionality polyisocyanate containing urethane groups according to claim 1, wherein the polyisocyanate (B) comprises polyisocyanates which contain isocyanurate groups and are based on 1,6-hexamethylene diisocyanate.

3. The high-functionality polyisocyanate containing urethane groups according to claim 1, wherein the polyfunctional alcohol (A) comprises at least one polyol selected from the group consisting of trimethylolpropane, trimethylolethane, glycerol, pentaerythritol, dipentaerythritol, and ditrimethylolpropane.

4. The high-functionality polyisocyanate containing urethane groups according to claim 3, wherein the polyol is alkoxylated.

5. The high-functionality polyisocyanate containing urethane groups according to claim 3, wherein the polyol is esterified with at least one group 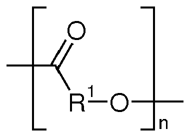 in which R¹ is a divalent alkylene radical containing 3 to 7 carbon atoms and n is a positive integer from 1 to 5.

6. The high-functionality polyisocyanate containing urethane groups according to claim 1, wherein the polyfunctional alcohol (A) is a mixture which comprises at least one diol selected from the group consisting of 1,2-ethanediol, 1,2-propanediol, 1,3-propanediol, 2,2-dimethyl-1,3-propanediol, 2-methyl-1,3-propanediol, 2-ethyl-1,3-propanediol, 2-ethyl-2-methyl-1,3-propanediol, 1,2-butanediol, 1,3-butanediol, 1,4-butanediol, 1,6-hexanediol, 2-ethyl-1,3-hexanediol, 2-propyl-1,3-heptanediol, and 1,8-octanediol.

7. The use of a high-functionality polyisocyanate containing urethane groups according to any of the preceding claims in a two-component coating composition.

8. A two-component coating composition comprising
- at least one high-functionality polyisocyanate containing urethane groups according to any of claims 1 to 6,
- at least one compound having at least 2 groups that are reactive toward isocyanate groups,
- optionally solvents, pigment, additives and/or thickeners.

9. A process for preparing a polyurethane coating material, which comprises reacting a high-functionality polyisocyanate containing urethane groups according to any of claims 1 to 6 with at least one binder which comprises isocyanate-reactive groups.

10. A process for preparing polyurethane coating materials according to claim 9, which comprises the binder being selected from the group consisting of polyacrylate polyols, polyester polyols, polyether polyols, polyurethane polyols, polyurea polyols, polyetherols, polycarbonates, polyesterpolyacrylate polyols, polyesterpolyurethane polyols, polyurethanepolyacrylate polyols, polyurethane-modified alkyd resins, fatty-acid-modified polyesterpolyurethane polyols, copolymers with allyl ethers, and copolymers and graft polymers from the groups of compounds stated.

11. The use of a high-functionality polyisocyanate containing urethane groups according to any of claims 1 to 6 as a curing agent in polyurethane coating materials.

12. The use according to claim 11, wherein the polyurethane coating material is used in refinish-coating, wood-coating or large-vehicle-coating systems.

13. The use of a high-functionality polyisocyanate containing urethane groups according to any of claims 1 to 6 as a curing agent in coating materials, adhesives or sealants.

## Revendications

1. Polyisocyanates à haute fonctionnalité, comportant des groupes uréthane, pouvant être obtenus par
- mise en réaction d'au moins un alcool multifonctionnel (A) ayant une fonctionnalité qui en moyenne statistique vaut plus de 2, l'alcool (A) multifonctionnel consistant en un polyol ou un mélange de polyols,
- d'au moins un polyisocyanate (B) ayant une fonctionnalité de plus de 2, qui comporte au moins un groupe isocyanurate, biuret, urétdione et/ou allophanate et est constitué d'isocyanates aliphatiques et/ou d'isocyanates cycloaliphatiques,
dans des conditions réactionnelles dans lesquelles des groupes uréthane sont formés entre (A) et (B), étant entendu que
- le rapport molaire des groupes NCO aux groupes OH entre (B) et (A) vaut au moins 3:1.

2. Polyisocyanates à haute fonctionnalité, comportant des groupes uréthane, selon la revendication 1, **caractérisés en ce que** pour ce qui est du polyisocyanate (B) il s'agit de polyisocyanates comportant des groupes isocyanurate, à base de 1,6-hexaméthylènediisocyanate.

3. Polyisocyanates à haute fonctionnalité, comportant des groupes uréthane, selon la revendication 1, **caractérisés en ce que** l'alcool multifonctionnel (A) comprend au moins un polyol choisi dans le groupe constitué par le triméthylolpropane, le triméthyloléthane, le glycérol, le pentaérythritol, le dipentaérythritol et le ditriméthylolpropane.

4. Polyisocyanates à haute fonctionnalité, comportant des groupes uréthane, selon la revendication 3, **caractérisés en ce que** le polyol est alcoxylé.

5. Polyisocyanates à haute fonctionnalité, comportant des groupes uréthane, selon la revendication 3, **caractérisés en ce que** le polyol est estérifié par au moins un groupe 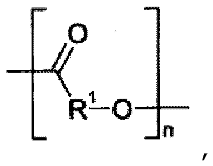 dans lequel R¹ représente un radical alkylène à deux liaisons, comportant 3 à 7 atomes de carbone, et n représente un nombre entier positif de 1 à 5.

6. Polyisocyanates à haute fonctionnalité, comportant des groupes uréthane, selon la revendication 1, **caractérisés en ce que** pour ce qui est de l'alcool multifonctionnel (A) il s'agit d'un mélange qui comprend au moins un diol choisi dans le groupe constitué par le 1,2-éthanediol, le 1,2-propanediol, le 1,3-propanediol, le 2,2-diméthyl-1,3-propanediol, le 2-méthyl-1,3-propanediol, le 2-éthyl-1,3-propanediol, le 2-éthyl-2-méthyl-1,3-propanediol, le 1,2-butanediol, le 1,3-butanediol, le 1,4-butanediol, le 1,6-hexanediol, le 2-éthyl-1,3-hexanediol, le 2-propyl-1,3-heptanediol et le 1,8-octanediol.

7. Utilisation de polyisocyanates à haute fonctionnalité, comportant des groupes uréthane, selon l'une quelconque des revendications précédentes, dans des matières de revêtement bicomposant.

8. Matières de revêtement bicomposant, contenant
- au moins un polyisocyanate à haute fonctionnalité, comportant des groupes uréthane, selon l'une quelconque des revendications 1 à 6,
- au moins un composé comportant au moins 2 groupes réactifs vis-à-vis de groupes isocyanate,
- en option un solvant, un pigment, des additifs et/ou un épaississant.

9. Procédé pour la production de peintures polyuréthane, **caractérisé en ce qu'**on fait réagir un polyisocyanate à haute fonctionnalité, comportant des groupes uréthane, selon l'une quelconque des revendications 1 à 6, avec au moins un liant qui contient des groupes réactifs avec un isocyanate.

10. Procédé pour la production de peintures polyuréthane selon la revendication 9, **caractérisé en ce que** le liant est choisi dans le groupe constitué par des polyacrylatepolyols, polyesterpolyols, polyétherpolyols, polyuréthanepolyols, polyuréepolyols, polyétherols, polycarbonates, polyesterpolyacrylatepolyols, polyesterpolyuréthanepolyols, polyuréthanepolyacrylatepolyols, résines alkyde modifiées avec des polyuréthanes, polyesterpolyuréthanepolyols modifiés avec des acides gras, copolymérisats avec des éthers alkyliques et copolymérisats ou polymérisats greffés à base desdits groupes de substances.

11. Utilisation de polyisocyanates à haute fonctionnalité, comportant des groupes uréthane, selon l'une quelconque des revendications 1 à 6, en tant que durcisseurs dans des peintures polyuréthane.

12. Utilisation selon la revendication 11, **caractérisée en ce qu'**on utilise la peinture polyuréthane dans des revêtements de peinture de retouche, pour bois ou véhicules de grande taille.

13. Utilisation de polyisocyanates à haute fonctionnalité, comportant des groupes uréthane, selon l'une quelconque des revendications 1 à 6, en tant que durcisseurs dans des peintures, des adhésifs et des matières d'étanchéité.
